(19) Europäisches Patentamt
European Patent Office
Office européen des brevets

(11) **EP 2 608 993 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **11740908.6**

(22) Anmeldetag: **01.08.2011**

(51) Int Cl.:
***B60T 8/40*** *(2006.01)*

(86) Internationale Anmeldenummer:
**PCT/EP2011/063216**

(87) Internationale Veröffentlichungsnummer:
**WO 2012/025336 (01.03.2012 Gazette 2012/09)**

(54) **VERFAHREN ZUR DRUCKSENSORLOSEN DRUCKMESSUNG IN EINEM DRUCKREGELAGGREGAT EINER KRAFTFARZEUGBREMSANLAGE UND KRAFTFARZEUGBREMSANLAGE MIT EINEM DRUCKREGELAGGRAGAT WORIN DAS VERFAHREN DURCHGEFÜHRT WIRD**

METHOD FOR MEASURING PRESSURE, WITHOUT PRESSURE SENSORS, IN A PRESSURE REGULATION UNIT OF A MOTOR VEHICLE BRAKING SYSTEM, AND A MOTOR VEHICLE BRAKING SYSTEM COMPRISING A PRESSURE REGULATION UNIT IN WHICH SAID METHOD IS IMPLEMENTED

PROCÉDÉ DE MESURE DE PRESSION, SANS CAPTEUR DE PRESSION, DANS UN RÉGULATEUR DE PRESSION D'UN SYSTÈME DE FREINAGE D'UN VÉHICULE À MOTEUR, ET SYSTÈME DE FREINAGE D'UN VÉHICULE À MOTEUR PRÉSENTANT UN RÉGULATEUR DE PRESSION POUR LEQUEL LE PROCÉDÉ EST MIS EN OEUVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2010 DE 102010039818**

(43) Veröffentlichungstag der Anmeldung:
**03.07.2013 Patentblatt 2013/27**

(73) Patentinhaber: **Continental Teves AG & Co. oHG 60488 Frankfurt (DE)**

(72) Erfinder:
• ZIMMERMANN, Jochen
  56357 Oberwallmenach (DE)
• STEIN, Michael
  65510 Idstein (DE)

(56) Entgegenhaltungen:
WO-A1-2005/007475    WO-A1-2007/057415
WO-A1-2009/053389    WO-A1-2009/127472
WO-A1-2010/122132    DE-A1-102005 041 556

EP 2 608 993 B1

**Beschreibung**

Die Erfindung betrifft ein Verfahren gemäß Oberbegriff von Anspruch 1 sowie ein Druckregelaggregat gemäß Oberbegriff von Anspruch 13.

Aus der DE 10 2005 041 556 A1 ist ein Verfahren zur Bestimmung eines zwischen einem Hauptbremszylinder und einem Einlassventil eines Radbremszylinders einer Kraftfahrzeugbremsanlage herrschenden Vordrucks bekannt. Entsprechend dem beschriebenen Verfahren wird der Vordruck (in der Regel der Druck am Ausgang des Hauptbremszylinders) unter Berücksichtigung des Verlaufs einer Nachlaufspannung eines mit einer Pumpe verbundenen Elektromotors bestimmt, der über eine PWM-Stufe (PWM: Pulsweitenmodulation) getaktet angesteuert wird. Hierzu werden mehrere Kenngrößen des Spannungsverlaufs gemessen und jeweils zur Bestimmung eines Vordruckwertes herangezogen, wobei eine Bewertung der Qualität und/oder Zuverlässigkeit der gemessenen Kenngrößen, eine Filterung und/oder Aufbereitung der Kenngrößen und/oder der daraus bestimmten Vordruckwerte bei mangelnder Qualität und/oder Zuverlässigkeit der gemessenen Kenngrößen und eine Mittelung der aus den verschiedenen Kenngrößen bestimmten Vordruckwerte stattfindet, wobei nur Druckwerte von ähnlicher Größe berücksichtigt werden und eine zeitliche Mittelung der Vordruckwerte zur Dämpfung von Fluktuationen durchgeführt wird. Für die spätere Ermittlung des Vordrucks im Betrieb der Pumpe wird eine Kennlinie in einem Datenspeicher (z.B. Festwertspeicher) einer Kraftfahrzeugbremsanlage hinterlegt. Unter Berücksichtigung des anhand der Kennlinie errechneten Vordrucks werden dann die entsprechend in der Bremsanlage zur Drucksteuerung verwendeten Ventile angesteuert.

Die Durchführung des zuvor beschriebenen Verfahrens wird aber dadurch erschwert, dass die Kennlinie für jede einzelne Pumpe und jede einzelne Bremsanlage infolge von Fertigungstoleranzen unterschiedlich ausfällt. Mit zunehmender Betriebsdauer der Pumpe kommen Alterungs- und Verschleißerscheinungen, beispielsweise am Drehlager des Pumpenläufers, hinzu, die die Betriebscharakteristik des Bremssystems beeinflussen.

Im Zusammenhang mit der Bestimmung des Vordrucks in einer Kraftfahrzeugbremsanlage ist es also bekannt, aus der Generatorspannung eines elektrischen Gleichstrommotors, welcher mit einer Hydraulikpumpe verbunden ist, die Drehzahl des Motors bzw. der Pumpe zu bestimmen. Die Generatorspannung kann z.B. durch einen Abgriff der Spannung an den Motorklemmen in der Mitte der Pulspause erfolgen, wobei die Spannung mit einem A/D-Wandler einmal pro Periode abgetastet wird. Es hat sich gezeigt, dass ein über eine so ermittelte Generatorspannung bestimmte Motordrehzahl noch zu ungenau für eine Vordruckbestimmung in modernen Kraftfahrzeugbremsanlagen ist.

Die Aufgabe der vorliegenden Erfindung besteht nun darin, ein besonders genaues Verfahren zur Schätzung des eingestellten Drucks ohne Verwendung eines Drucksensors bereitzustellen, wobei das Verfahren insbesondere dann von Vorteil ist, wenn die Drehzahl der eingesetzten Pumpenmotoren individuell schwankt oder individuelle Fertigungsstreuungen der Pumpe vorliegen, die zu Abweichungen der Fördermenge führen. Diese Aufgabe wird erfindungsgemäß gelöst durch das Verfahren gemäß Anspruch 1.

Nach dem erfindungsgemäßen Verfahren erfolgt eine drucksensorlose Druckmessung in einem Druckregelaggregat einer Kraftfahrzeugbremsanlage mittels einer Motorpumpeneinheit bestehend aus einem Elektromotor und einer Hydraulikpumpe, wobei der Motor über eine elektrische Pulsweitenmodulation (z.B. während des Betriebs einer ABS-Regelung) angesteuert wird.

Zunächst wird gemäß dem Verfahren ein relatives Motorkennfeld für die Serie vor der Herstellung eines individuellen Druckregelaggregats oder einer Motorpumpeneinheit oder eines Motors erstellt. Das Kennfeld umfasst zumindest die Daten

- motordrehzahlabhängiger Parameter,
- Stärke der Motoransteuerung (z.B. Duty Cycle) und
- Parameter über die Höhe der Motorlast (z.B. Motormoment oder Gegendruck).

Dann werden individuelle Motorkenngrößen (z.B. Maximaldrehzahl oder Drehzahl bei einem bestimmten Druck oder magnetische Motorkenngrößen etc.) nach oder während der Fertigung der Hydraulikeinheit oder des Motors ermittelt. Anschließend wird ein aktueller drehzahlabhängiger Parameters des Motors (z.B. die aktuelle Drehzahl aus der Generatorspannung) während des Betriebs der Pumpe bestimmt. Schließlich wird ein für die Bremsanlage charakteristischer Druck (z.B. der Hauptzylinderdruck der Bremsanlage) über ein aus dem relativen Motorkennfeld errechnetes absolutes Motorkennfeld mittels des aktuellen motordrehzahlabhängigen Parameters und des aktuellen, die Stärke der Motoransteuerung bestimmenden Werts berechnet (z.B. der Duty Cycle DC der bei der Motoransteuerung vorgenommenen PWM-Regelung), wobei bei der Berechnung eine Berücksichtigung der individuellen Motorkenngrößen vorgenommen wird.

Vorzugsweise sind im relativen Motorkennfeld Daten gespeichert, die den drehzahlabhängigen Parameter relativ zu einem absoluten drehzahlabhängigen Parameter (z.B. Drehzahl bei Vollaussteuerung ohne Last) angeben. Hierdurch ist es möglich, später ein individuelles Kennfeld mit absoluten Drehzahlwerten durch Einbeziehung von individuell gemessenen Parametern zu berechnen.

Das relative Motorkennfeld für die Serie wird bevorzugt bei jeder individuellen Herstellung einer Bremsanlage in einen Speicher des Druckregelaggregats, welches insbesondere aus einem elektronischen Regler und einer Hydraulikeinheit zusammengesetzt ist, übertragen. Alternativ ist es bevorzugt, eine entsprechende Maßnahme zu treffen, mit der das relative Motorkennfeld in das Druckregelaggregat übertragen wird.

Die individuellen Motorkenngrößen umfassen bevorzugt

- zumindest eine individuelle Motorkenngröße welche die Motordrehzahl bei einer vorgegebenen ersten Stärke der Motoransteuerung bei einer ersten vorgegebenen Motorlast angibt (z.B. ohne Druckbeaufschlagung der Pumpe im Leerlauf oder lastfreier Motor),

- zumindest eine weitere individuelle Motorkenngröße welche die Drehzahl bei einer bestimmten zweiten Motorlast (z.B. ein Moment, dass einem vorgegebenen hydraulischen Gegendruck entspricht) bei einer vorgegebenen Stärke der Motoransteuerung angibt, und

- eine weitere individuelle Motorkenngröße (z.B. ein magnetischer Parameter des Motors), die die Abhängigkeit der Drehzahl von einer Generatorspannung $G_K$ angibt.

Der aktuelle motordrehzahlabhängige Parameter ist vorzugsweise aus der Generatorspannung $G_K$ bestimmt oder es handelt sich um die Generatorspannung selbst.

Bei dem absoluten drehzahlabhängigen Parameter handelt es sich bevorzugt um die Drehzahl bei maximaler Aussteuerung (z.B. bei DC = 100%) des individuell gefertigten Motors. Mittels der individuellen Motorkenngrößen (N_MAX, N_200) wird/werden vorzugsweise der/die relative/n drehzahlabhängige/n Parameter (n/n_max) in absolute drehzahlabhängige Parameter (n_max) umgerechnet. Bevorzugt sind in dem Motorkennfeld Stützstellen mit vorhandenen Messwerten für den relativen drehzahlabhängigen Parameter bei bestimmten Druckwerten vorhanden.

Vorzugsweise wird dann das relative Motorkennfeld mit den nach dem Verfahren im vorherigen Absatz ermittelten absoluten drehzahlabhängigen Parametern (insbesondere Drehzahlwerten bei maximaler Aussteuerung) in ein absolutes Motorkennfeld umgerechnet.

In dem Motorkennfeld sind dann Stützstellen mit vorhandenen Messwerten für den absoluten drehzahlabhängigen Parameter bei bestimmten Druckwerten vorhanden. Durch Interpolation oder Extrapolation werden zweckmäßigerweise weitere Werte des absoluten drehzahlabhängigen Parameter bei Drücken berechnet, für die keine Stützstellen vorhanden sind.

Der motordrehzahlabhängige Parameter und/oder die Generatorspannung $G_K$ wird vorzugsweise durch einfache, insbesondere mehrfache,

Abtastung der Generatorspannung des Motors in einer Pulspause einer PWM-Periode der PWM-Motoransteuerung bestimmt.

In der Pulspause erfolgt vorzugsweise eine Mehrfachabtastung. Die durch Mehrfachabtastung bestimmten Abtastwerte werden durch ein Zeitfenster selektiert, wobei das Zeitfenster in Abhängigkeit der Pumpendrehzahl festgelegt wird.

Die Pumpendrehzahl wird vorzugsweise aus der Generatorspannung $G_K$ und der weiteren individuellen Motorkenngröße bestimmt.

Die Erfindung betrifft auch eine Kraftfahrzeugbremsanlage mit einem Druckregelaggregat umfassend einen elektronischen Regler und einen Pumpenmotor, welcher über eine PWM-Stufe angesteuert wird und mit einer Hydraulikpumpe verbunden ist, wobei Mittel zur Abtastung der Motorspannung vorhanden sind. Der elektronische Regler, genauer gesagt, die darin enthaltene elektronische Recheneinheit, führt dabei das weiter oben beschriebene Verfahren zur drucksensorlosen Druckmessung aus.

Weitere bevorzugte Ausführungsformen ergeben sich aus den Unteransprüchen und der nachfolgenden Beschreibung eines Ausführungsbeispiels an Hand von Figuren.

Es zeigen

Fig. 1      ein Diagramm, welches ein relatives Motorkennfeld wiedergibt,

Fig. 2      ein aus dem relativen Motorkennfeld errechnetes absolutes Motorkennfeld mit einem Beispiel einer Druckschätzung nach der Erfindung während der Betriebs der (individuellen) Kraftfahrzeugbremse und

Fig. 3      ein Diagramm mit dem zeitlichen Verlauf der Motorklemmenspannung und des Winkels der Pumpenposition mit einem Zeitfenster zur Auswahl von Abtastwerten.

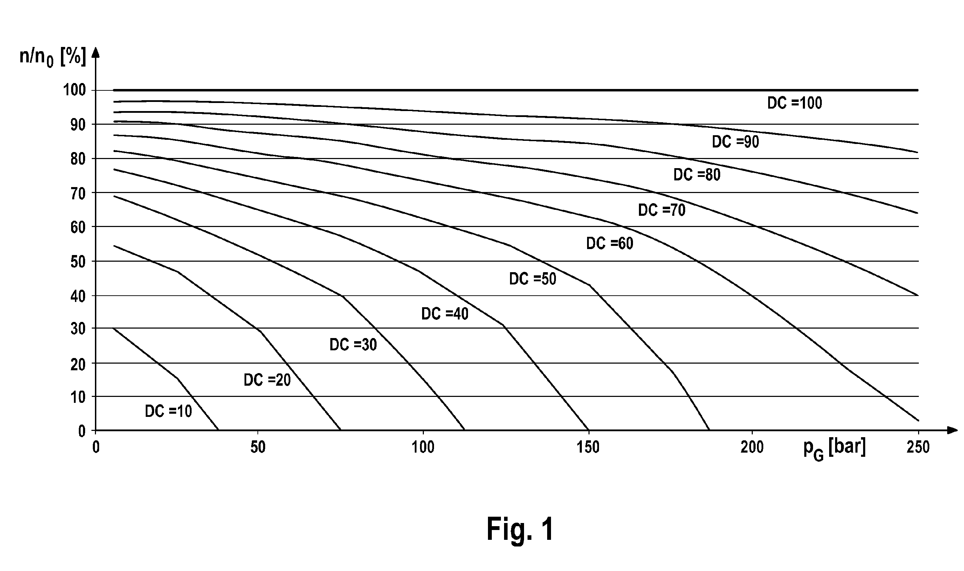

Fig. 1 zeigt das relative Kennfeld eines permanenterregten Gleichstrommotors mit PWM-Ansteuerung. Die Drehzahl des Motors wird über den Duty Cycle (DC, 0 bis 100%) der PWM-Ansteuerung eingestellt. Auf der Ordinate ist die relative Drehzahl $n/n_0$ des Motors in Prozent aufgetragen, welche sich aus dem Verhältnis von Drehzahl n bei der jeweiligen Aussteuerung der PWM zur Drehzahl $n_0$ bei Vollaussteuerung (beim jeweilig vorliegenden Gegendruck) ergibt.

Auf der Abszisse ist der Gegendruck $P_G$ dargestellt, der das Lastmoment des Motors widerspiegelt.

Das Kennfeld ergibt sich durch eine Schar von Stützstellen bei verschiedenen Duty Cycles und verschiedenen Gegendrücken bzw. Lastmomenten an dem Motor bzw. der Pumpe.

Das in Fig. 1 dargestellte relative Kennfeld wird durch Messung an einem für die spätere Serienfertigung repräsentativen Druckregelaggregat einmalig erstellt und später dann während der Serienproduktion in Form von Stützstellen in einem Speicher des in Serie gefertigten Druckregelaggregat gespeichert. Die Messwerte des repräsentativen Druckregelaggregats werden besonders zweckmäßig über eine statistische Messreihe aus mehreren vor der Serie gefertigen Einzelstücken gebildet.

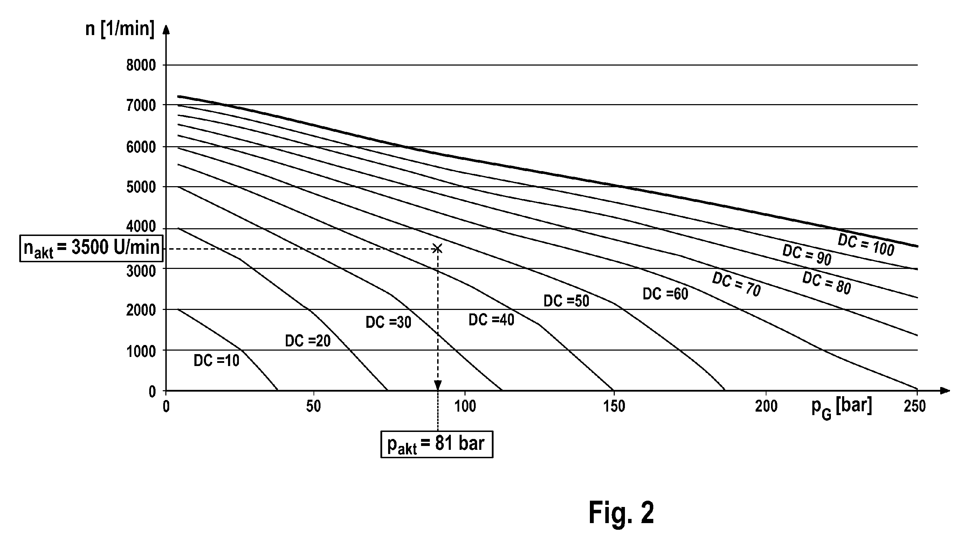

Nachfolgend wird unter Bezugnahme auf Fig. 2 beschrieben, wie sich aus dem relativen Kennfeld das absolute Kennfeld ermitteln lässt.

Bei oder nach der Produktion eines individuellen Dreckregelaggregats oder einer Pumpeneinheit oder eines Motors werden jedesmal die nachfolgend beschriebenen individuellen Motorkenngrößen ermittelt. Diese individuellen Motorkenngrößen werden in einem Speicher des elektronischen Reglers, der mit der Hydraulikeinheit des Druckregelaggregats verbunden ist, dauerhaft hinterlegt.

Als individuelle Motorkenngröße wird zunächst der Wert der Maximaldrehzahl N_MAX bei Vollansteuerung des Motors ohne Gegenlast (entspricht einem Differenzdruck an der Pumpe von 0 bar) bestimmt. Dieser Wert lässt sich auch bei einem Druckregelaggregat bestimmen, das noch nicht mit Hydraulikflüssigkeit befüllt ist. Hierzu wird der mit dem Motor verbundene PWM-Stromregler mit einem Duty Cycle von DC = 100 % angesteuert.

Dann wird als weitere individuelle Motorkenngröße die Kenngröße N_200 bestimmt. Diese gibt die Drehzahl des Motors bei einer definierten, vergleichsweise hohen Gegenlast, z.B. bei 200bar Gegendruck auf der Pumpenausgangsseite an.

Schließlich wird die Kenngröße U2N bestimmt. Diese bezeichnet die Magnetkonstante des Motors entsprechend dem bei einem permanenterregten Gleichstrommotor gültigen Zusammenhang:

$$Drehzahl = \frac{Generatorspannung}{U2N}$$

Das absolute Kennfeld wird mittels der vorstehenden, nach der Fertigung ermittelten individuellen Motorkenngrößen, aus dem relativen Kennfeld erstellt. Hierzu wird für jeden Betriebspunkt (Lastmoment/Druck) eine Umrechnung der relativen Drehzahl auf eine absolute Drehzahl vorgenommen. Die neuen Werte können dann als Stützstellen des absoluten Kennfelds temporär errechnet oder gespeichert werden. Dabei ist es zweckmäßig, das absolute Kennfeld nur temporär im Bereich des aktuellen Arbeitspunkts zu berechnen, wodurch der benötigte Speicherplatz stark reduziert werden kann. Die Drehzahl bei Vollansteuerung über der Last verhält sich beim fremderregten Gleichstrommotor nahezu linear. Daher ist sie mit den beiden Kalibrierpunkten N_MAX und N_200 ausreichend genau beschrieben. Damit ergibt sich eine Kennlinie "Drehzahl in Abhängigkeit vom Gegendruck" entsprechend 100% DC mit der Gleichung:

$$n = \frac{p - P_0}{P_{200} - P_0} \cdot \left( N_{200} - N_0 \right) + N_0$$

Wird die Schar der Daten des relativen Kennfelds mit der vorstehenden individuell kalibrierten Motorkennlinie multipliziert, erhält man das in Fig. 2 dargestellte absolute Kennfeld.

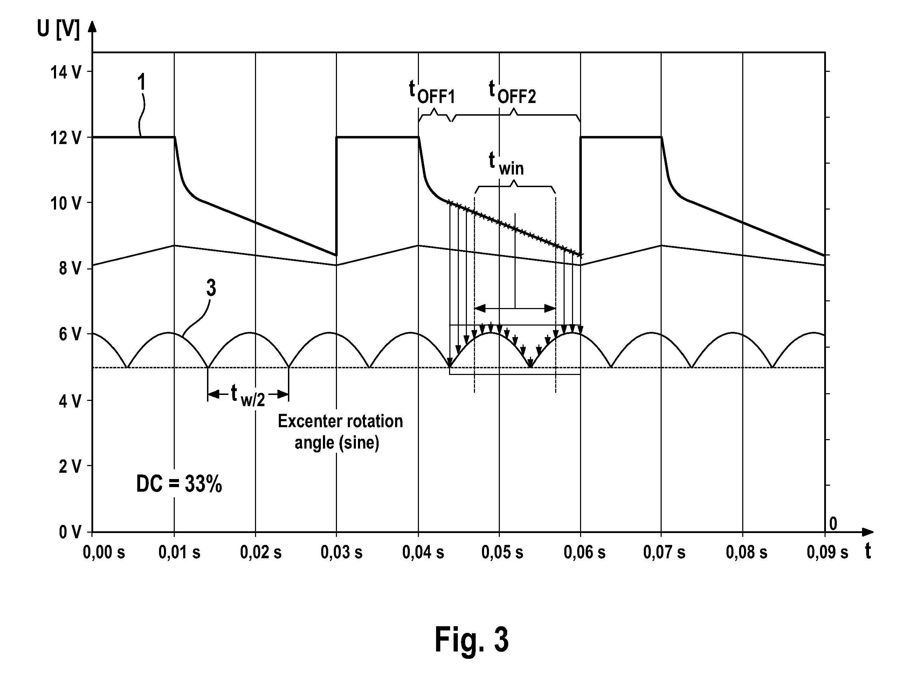

Im Folgenden wird ein Beispiel einer Druckschätzung unter Verwendung des absoluten Kennfeldes beschrieben. Der sich dem Pumpenmotor entgegenstellende Druck (Lastmoment) entspricht im wesentlichen dem zu schätzenden charakteristischen Druck (der charakteristische Druck der Bremsanlage ist beispielsweise der Druck am Ausgang der Tandemhauptbremszylinders). Die aktuelle Generatorspannung, die sich aus der Motordrehzahl ergibt, wird durch Mehrfachabtastung der Motorklemmenspannung in der Pulspause bestimmt, wie an Hand von Fig. 3 weiter unten noch näher beschrieben wird.

Unter Berücksichtigung der aus früheren Kalibriermessungen ermittelten Magnetkonstante U2N des Motors lässt sich dann unter Berücksichtigung der zuvor bestimmten Generatorspannung und der Gleichung

$$Drehzahl = \frac{Generatorspannung}{U2N}$$

die aktuelle Drehzahl ermitteln. Im dargestellten Beispiel in Fig. 2 beträgt die so bestimmte aktuelle Drehzahl 3500 U/min.

Mit dem weiter oben beschriebenen absoluten Kennfeld des Motors, welches unter Zuhilfenahme der nach der Fertigung ermittelten individuellen Motorkenngrößen bestimmt wurde und der ermittelten Drehzahl, kann dann der Druck im Bremskreis vor dem Pumpenausgang (entspricht im wesentlichen dem Hauptzylinderdruck) bestimmt werden. Hierzu wird der aktuelle Wert des Duty Cycle verwendet, welcher im dargestellte Beispiel 45% beträgt. Da in der Schar der Kurven des absoluten Kennfelds keine Kurve für DC = 45% gespeichert ist, wird auf der Ordinate eine Interpolation vorgenommen, so dass man den entsprechenden Druckwert (im dargestellten Beispiel $P_{akt}$ = 81 bar) auf der Abszisse erhält.

In Fig. 3 stellt Kurve 1 den zeitlichen Verlauf der Klemmenspannung des Pumpenmotors dar. Der Pumpenmotor wird über eine PWM-Treiberstufe angesteuert. An den Motorklemmen liegt dann das Signal der Kurve 1 an. Die PWM-Periode $T_{PWM}$ eines PWM-Zyklus ist aufgeteilt auf eine An- und eine Aus-Phase ($t_{ON}$ bzw. $t_{OFF}$). Das Verhältnis von Länge der An-Phase zu Aus-Phase ergibt sich aus der Höhe der Aussteuerung (Duty Cycle, Werte zwischen 0 und 1) der PWM-Stufe. Während der Zeit $t_{ON}$ ist der Motor mit der Betriebsspannung verbunden. Die Drehzahl des Pumpenmotors kann über die Generatorspannung während der Aus-Phase bestimmt werden. Bei dem eingesetzten fremderregten Gleichstrommotor verhält sich die Generatorspannung nahezu linear mit der Drehzahl. Für die Messung der Spannungswerte sind die Motorklemmen mit einem A/D-Wandler verbunden, welcher eine durch einen Triggerpuls initiierte Abtastung zu einem bestimmten Zeitpunkt in der Pulpause vornimmt. Wie an Hand der Pfeile dargestellt, werden nur Abtastwerte der Generatorspannung innerhalb eines vorgegebenen Zeitfensters in der Ausschaltphase des PWM-Ansteuersignals zur Berechnung der Drehzahl berücksichtigt. Aus den so gewonnenen Daten, die nach dem Abklingen des Motorstroms liegen, kann beispielsweise ein Mittelwert für die Generatorspannung gebildet werden. Es ist außerdem möglich, aus den Daten (z.B. durch lineare Regression) eine Ausgleichsgerade zu berechnen, wodurch sich in der Regel eine höhere Messgenauigkeit der darüber bestimmten Drehzahl ergibt.

In der beispielgemäßen hydraulischen Vorrichtung einer Kraftfahrzeugbremse ist der oben beschriebene Motor über seine Welle mit einer Pumpe verbunden, die einen drehwinkelabhängigen Drehmomentverlauf hat, welcher insbesondere, je nach Bauart der Pumpe, einfach, zweifach oder mehrfach periodisch verläuft. Im Falle einer Exzenter-Zweikreisradialkolbenpumpe ergibt sich schematisch vereinfacht ein Drehmomentverlauf entsprechend Kurve 3 mit einer zweifachen Periode, d.h., die Frequenz des Momentverlaufs ist doppelt so groß wie die Drehfrequenz des Motors. Durch eine besonders bevorzugt vorgenommene geeignete Wahl des Zeitfensters kann der Einfluss des Drehmoments auf die Drehzahlbestimmung vorteilhaft deutlich verringert werden. Dabei wird ausgenutzt, dass die Größe des Fensters über eine zunächst grobe Messung der Drehzahl so genau festgelegt werden kann, dass immer ein ganzzahliges Vielfaches einer Lasthalbwelle in dem ausgewählten Messfenster liegt.

Wie bereits beschrieben, lässt sich mit der nach dem obigen Verfahren sehr genau bestimmten Drehzahl der Systemdruck eines Kraftfahrzeugbremssystems mit besonders hoher Genauigkeit bestimmen. Die Bestimmung des Drucks ist alternativ auch möglich, in dem das Lastmoment an der Pumpe bestimmt wird. Mit Hilfe der gewonnen Parameter ist es gemäß einer weiteren bevorzugten Ausführungsform besonders vorteilhaft möglich, über die genauere Kenntnis des Hauptzylinderdrucks eine analoge Ventilansteuerung zu verbessern.

**Patentansprüche**

1. Verfahren zur drucksensorlosen Druckmessung in einem Druckregelaggregat einer Kraftfahrzeugbremsanlage mittels einer Motorpumpeneinheit bestehend aus einem Elektromotor und einer Hydraulikpumpe, wobei der Motor über eine elektrische Pulsweitenmodulation angesteuert wird, **gekennzeichnet durch** die Schritte:

- Erstellen eines relativen Motorkennfelds für die Serie vor der Herstellung eines individuellen Druckregelaggregats oder einer Motorpumpeneinheit oder eines Motors, welches zumindest die Daten motordrehzahlabhängiger Parameter ($n/n_0$), Stärke der Motoransteuerung (DC) und Parameter über die Höhe der Motorlast (P_G) umfasst,
- Ermitteln von individuellen Motorkenngrößen (N_MAX, N_200, U2N) nach oder während der Fertigung der Hydraulikeinheit oder des Motors,
- Ermitteln eines aktuellen drehzahlabhängigen Parameters des Motors ($n_{akt}$) während des Betriebs der Pumpe und
- Berechnen eines für die Bremsanlage charakteristischen Drucks ($P_{THZ}$) über ein aus dem relativen Motorkennfeld errechnetes absolutes Motorkennfeld mittels des actuellen motordrehzahlabhängigen Parameters ($n_{akt}$) und des aktuellen, die Stärke der Motoransteuerung bestimmenden Werts (DC), wobei bei der Berechnung eine Berücksichtigung der individuellen Motorkenngrößen (N_MAX,N_200,U2N) vorgenommen wird.

2. Verfahren nach Anspruch 1, **dadurch gekennzeichnet, dass** im relativen Motorkennfeld Daten gespeichert sind, die den drehzahlabhängigen Parameter (n/n_max) relativ zu einem absoluten drehzahlabhängigen Parameter (n_max) angeben.

3. Verfahren nach Anspruch 1 oder 2, **dadurch gekennzeichnet, dass** das relative Motorkennfeld für die Serie bei jeder individuellen Herstellung eines Druckregelaggregats in einen Speicher des Druckregelaggregats übertragen wird oder eine entsprechende Maßnahme getroffen wird, mit der das relative Motorkennfeld in das Druckregelaggregat übertragen wird.

4. Verfahren nach mindestens einem der Ansprüche 1 bis 3, **dadurch gekennzeichnet, dass** die individuellen Motorkenngrößen zumindest eine individuelle Motorkenngröße (N_MAX), welche die Motordrehzahl bei einer vorgegebenen ersten Stärke der Motoransteuerung bei einer ersten vorgegebenen Motorlast umfasst, zumindest eine weitere individuelle Motorkenngröße (N_200), welche die Drehzahl bei einer bestimmten zweiten Motorlast bei einer vorgegebenen Stärke der Motoransteuerung umfasst, und eine weitere individuelle Motorkenngröße (U2N), die die Abhängigkeit der Drehzahl von einer Generatorspannung ($G_K$) angibt.

5. Verfahren nach Anspruch 4, **dadurch gekennzeichnet, dass** der aktuelle motordrehzahlabhängige Parameter (n_akt) aus der Generatorspannung ($G_K$) bestimmt wird oder diese selbst ist.

**6.** Verfahren nach Anspruch 2, **dadurch gekennzeichnet, dass** der absoluten drehzahlabhängigen Parameter (n_max) die Drehzahl bei maximaler Aussteuerung des individuell gefertigten Motors ist.

**7.** Verfahren nach Anspruch 2, **dadurch gekennzeichnet, dass** mittels der individuellen Motorkenngrößen (N_MAX, N_200) der/die relative/n drehzahlabhängige/n Parameter (n/n_max) in absolute drehzahlabhängige Parameter (n_max) umgerechnet wird/werden.

**8.** Verfahren nach Anspruch 7, **dadurch gekennzeichnet, dass** das relative Motorkennfeld mit den absoluten drehzahlabhängigen Parametern in ein absolutes Motorkennfeld umgerechnet wird.

**9.** Verfahren nach Anspruch 8, **dadurch gekennzeichnet, dass** in dem Motorkennfeld Stützstellen mit vorhandenen Messwerten für den absoluten drehzahlabhängigen Parameter bei bestimmten Druckwerten vorhanden sind und durch Interpolation oder Extrapolation weitere Werte des absoluten drehzahlabhängigen Parameter bei Drücken berechnet werden, für die keine Stützstellen vorhanden sind.

**10.** Verfahren nach mindestens einem der Ansprüche 4 und 5, **dadurch gekennzeichnet, dass** der motordrehzahlabhängige Parameter und/oder die Generatorspannung ($G_K$) durch einfache, insbesondere mehrfache, Abtastung der Generatorspannung des Motors in einer Pulspause einer PWM-Periode der PWM-Motoransteuerung bestimmt wird.

**11.** Verfahren nach Anspruch 10, **dadurch gekennzeichnet, dass** eine Mehrfachabtastung in der Pulspause erfolgt und die durch Mehrfachabtastung bestimmten Abtastwerte durch ein Zeitfenster selektiert werden, wobei das Zeitfenster in Abhängigkeit der Pumpendrehzahl festgelegt wird.

**12.** Verfahren nach Anspruch 11, **dadurch gekennzeichnet, dass** die Pumpendrehzahl aus der Generatorspannung ($G_K$) und der weiteren individuellen Motorkenngröße (U2N) bestimmt wird.

**13.** Kraftfahrzeugbremsanlage mit einem Druckregelaggregat umfassend einen elektronischen Regler und einen Pumpenmotor, welcher über eine PWM-Stufe angesteuert wird und mit einer Hydraulikpumpe verbunden ist, wobei Mittel zur Abtastung der Motorspannung vorhanden sind, **dadurch gekennzeichnet, dass** der elektronische Regler ein Verfahren zur drucksensorlosen Druckmessung gemäß mindestens einem der Ansprüche 1 bis 12 durchführt.

**Claims**

**1.** Method for measuring pressure, without pressure sensors, in a pressure regulation unit of a motor vehicle braking system by means of a motor pump unit composed of an electric motor and a hydraulic pump, wherein the motor is actuated by means of electrical pulse width modulation,
**characterized by** the steps:

- producing a relative motor characteristic diagram for the series before the manufacture of an individual pressure regulation unit or of a motor pump unit or of a motor which comprises at least the data of motor-rotational-speed-dependent parameters ($n/n_0$), intensity of the motor actuation (DC) and parameters relating to the level of the motor load (($P\_G$),
- determining individual motor characteristic variables (N_MAX, N_200, U2N) after or during the fabrication of the hydraulic unit or of the motor,
- determining a current rotational-speed-dependent parameter of the motor ($N_{act}$) during the operation of the pump, and
- calculating a pressure ($P_{THZ}$), which is characteristic of the braking system, by means of an absolute motor characteristic diagram calculated from the relative motor characteristic diagram by means of the current motor-rotational-speed-dependent parameter ($n_{act}$) and the current value (DC) which determines the intensity of the motor actuation, wherein the individual motor characteristic variables (N_MAX, N_200, U2N) are taken into account in the calculation.

**2.** Method according to Claim 1, **characterized in that** data which specify the rotational-speed-dependent parameter (n/n_max) relative to an absolute rotational-speed-dependent parameter (n_max) are stored in the relative motor characteristic diagram.

**3.** Method according to Claim 1 or 2, **characterized in that** on each individual occasion that a pressure regulation unit is manufactured the relative motor characteristic diagram for the series is transmitted into a memory of the pressure regulation unit, or a corresponding measure, with which the relative motor characteristic diagram is transmitted into the pressure regulation unit, is taken.

**4.** Method according to at least one of Claims 1 to 3, **characterized in that** the individual motor characteristic variables comprise at least one individual motor characteristic variable (N_MAX) which comprises the motor rotational speed in the case of a predefined first intensity of the motor actuation with a first predefined motor load, at least one further individual motor characteristic variable (N_200) which comprises the rotational speed in the case of a certain second motor load with a predefined intensity of the motor actuation, and a further individual motor characteristic variable (U2N) which specifies the dependence of a rotational speed on a generator voltage ($G_K$).

5. Method according to Claim 4, **characterized in that** the current motor-rotational-speed-dependent parameter (n_act) is determined from the generator voltage ($G_K$) or is the actual generator voltage ($G_K$).

6. Method according to Claim 2, **characterized in that** the absolute rotational-speed-dependent parameter (n_max) is the rotational speed in the case of maximum modulation of the individually fabricated motor.

7. Method according to Claim 2, **characterized in that** the relative rotational-speed-dependent parameter/parameters (n/n_max) is/are converted into absolute rotational-speed-dependent parameters (n_max) by means of the individual motor characteristic variables (N_MAX, N_200).

8. Method according to Claim 7, **characterized in that** the relative motor characteristic diagram is converted into an absolute motor characteristic diagram with the absolute rotational-speed-dependent parameters.

9. Method according to Claim 8, **characterized in that** reference points with existing measured values for the absolute rotational-speed-dependent parameter in the case of certain pressure values are present in the motor characteristic diagram, and further values of the absolute rotational-speed-dependent parameter are calculated by interpolation or extrapolation for pressures for which no reference points are present.

10. Method according to at least one of Claims 4 and 5, **characterized in that** the motor-rotational-speed-dependent parameter and/or the generator voltage ($G_K$) is determined by single, in particular multiple, sampling of the generator voltage of the motor in an inter-pulse period of a PWM period of the PWM motor actuation process.

11. Method according to Claim 10, **characterized in that** multiple sampling takes place in the inter-pulse period and the sampled values which are determined by multiple sampling are selected by means of a time window, wherein the time window is defined as a function of the pump rotational speed.

12. Method according to Claim 11, **characterized in that** the pump rotational speed is determined from the generator voltage ($G_K$) and the further individual motor characteristic variable (U2N).

13. Motor vehicle braking system having a pressure regulation unit comprising an electronic regulator and a pump motor which is actuated by means of a PWM stage and is connected to a hydraulic pump, wherein means for sampling the motor voltage are present, **characterized in that** the electronic regulator carries out a method for measuring pressure, without pressure sensors), according to at least one of Claims 1 to 12.

**Revendications**

1. Procédé de mesure de pression sans capteur de pression dans un régulateur de pression d'un système de freinage d'un véhicule à moteur au moyen d'une unité de pompe motorisée composé d'un moteur électrique et d'une pompe hydraulique, pour lequel le moteur est piloté par une modulation électrique d'impulsion en largeur, **caractérisé par** les étapes :

   - établissement d'une cartographie du moteur relative pour la série avant la fabrication d'un régulateur de pression individuel ou d'une unité de pompe motorisée ou d'un moteur, lequel comprend au moins les données de paramètres ($n/n_0$) en fonction du régime du moteur, la puissance d'activation du moteur (DC) et de paramètres concernant la hauteur de la charge du moteur (P_G),
   - détermination des grandeurs caractéristiques du moteur individuelles (N MAX, N_200, U2N) avant ou pendant la fabrication de l'unité hydraulique ou du moteur,
   - détermination d'un paramètre actuel en fonction du régime du moteur ($n_{act}$) pendant le fonctionnement de la pompe et
   - calcul d'une pression ($P_{THZ}$) caractéristique pour le système de freinage par une cartographie de moteur absolue calculée à partir d'une cartographie de moteur relative au moyen du paramètre ($n_{act}$) actuel en fonction du régime du moteur et de la valeur (DC) actuelle définissant la puissance d'activation du moteur, pour lequel on procède, lors du calcul, à une prise en considération des valeurs caractéristiques du moteur individuelles (N_MAX, N_200, U2N).

2. Procédé selon la revendication 1, **caractérisé en ce que** dans la cartographie du moteur relative des données sont mémorisées qui indiquent le paramètre en fonction du régime du moteur (n/n_max) par rapport à un paramètre absolu en fonction du régime (n_max).

**3.** Procédé selon la revendication 1 ou 2, **caractérisé en ce que** la cartographie du moteur relative est transmise pour la série lors de chaque fabrication individuelle d'un régulateur de pression dans une mémoire du régulateur de pression ou une mesure correspondante est prise avec laquelle la cartographie du moteur relative est transmise dans le régulateur de pression.

**4.** Procédé selon au moins une quelconque des revendications 1 à 3, **caractérisé en ce que** les grandeurs caractéristiques du moteur individuelles indiquent au moins une valeur caractéristique du moteur individuelle (N_MAX), laquelle comprend le régime du moteur pour une première puissance préétablie d'activation du moteur pour une première charge du moteur préétablie, au moins une autre valeur caractéristique du moteur (N_200) individuelle, laquelle comprend le régime pour une certaine deuxième charge du moteur pour une puissance préétablie d'activation du moteur et une autre valeur caractéristique du moteur (U2N) individuelle qui indique le régime en fonction d'une tension d'alternateur ($G_K$).

**5.** Procédé selon la revendication 4, **caractérisé en ce que** le paramètre (n_act) actuel en fonction du régime du moteur est défini à partir de la tension d'alternateur ($G_K$) ou est même celle-ci.

**6.** Procédé selon la revendication 2, **caractérisé en ce que** le paramètre absolu en fonction du régime du moteur (n_max) est le régime lors d'une activation maximale du moteur fabriqué individuellement.

**7.** Procédé selon la revendication 2, **caractérisé en ce qu'**au moyen des valeurs caractéristiques du moteur individuelles (N_MAX, N_200), le/les paramètre(s) relatif(s) en fonction du régime (n/n_max) est/sont converti(s) en paramètres (n_max) absolus en fonction du régime.

**8.** Procédé selon la revendication 7, **caractérisé en ce que** la cartoghraphie du moteur relative est convertie avec les paramètres absolus en fonction du régime en une cartographie du moteur absolue.

**9.** Procédé selon la revendication 8, **caractérisé en ce que** dans la cartographie du moteur, il y a des points d'appui avec des valeurs de mesure existantes pour les paramètres absolus en fonction du régime à certaines valeurs de pression et que par interpolation ou extrapolation, d'autres valeurs du paramètre absolu en fonction du régime sont calculées lors de la pression pour lesquelles il n'y a pas de points d'appui.

**10.** Procédé selon au moins une quelconque des revendications 4 et 5, **caractérisé en ce que** le paramètre en fonction du régime du moteur et/ou la tension d'alternateur ($G_K$) est déterminé par exploration simple ou multiple de la tension d'alternateur du moteur dans un intervalle d'impulsion d'une période de modulation d'impulsion en largeur (MIL) de l'activation du moteur à MIL.

**11.** Procédé selon la revendication 10, **caractérisé en ce qu'**une exploration multiple a lieu dans l'intervalle d'impulsion et les valeurs d'exploration définies par exploration multiple sont sélectionnées par une fenêtre de temps, pour lequel la fenêtre de temps est établie en fonction de la vitesse de rotation de la pompe.

**12.** Procédé selon la revendication 11, **caractérisé en ce que** la vitesse de rotation de la pompe est définie à partir de la tension d'alternateur ($G_K$) et de l'autre valeur caractéristique du moteur individuelle (U2N).

**13.** Système de freinage d'un véhicule à moteur avec un régulateur de pression comprenant un régulateur électronique et un moteur de pompe, lequel est activé par une phase MIL et est raccordé à une pompe hydraulique, pour lequel il y a des moyens d'exploration de la tension du moteur **caractérisé en ce que** le régulateur électronique exécute un procédé pour la mesure de pression sans capteur de pression selon au moins l'une quelconque des revendications 1 à 12.

Fig. 1

Fig. 2

Fig. 3

EP 2 608 993 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041556 A1